(19) Europäisches Patentamt
European Patent Office
Office européen des brevets

(11) EP 2 077 671 B1

(12) **EUROPEAN PATENT SPECIFICATION**

(45) Date of publication and mention
of the grant of the patent:
**19.06.2019 Bulletin 2019/25**

(21) Application number: **08100143.0**

(22) Date of filing: **07.01.2008**

(51) Int Cl.:
*H04N 21/2368* (2011.01)  *H04N 21/43* (2011.01)
*H04N 21/434* (2011.01)  *H04N 21/439* (2011.01)
*H04N 21/44* (2011.01)  *H04N 7/52* (2011.01)

(54) **Streaming media player and method**

Strömungsmedienspieler und Verfahren

Lecteur de diffusion multimédia et procédé

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**08.07.2009 Bulletin 2009/28**

(73) Proprietor: **Vestel Elektronik Sanayi ve Ticaret A.S.
45030 Manisa (TR)**

(72) Inventors:
 • **Tetik, Yusuf Engin
 45030 Manisa (TR)**
 • **Ateskan, Yusuf Selcuk
 45030 Manisa (TR)**
 • **Coskun, Orhan
 45030 Manisa (TR)**
 • **Sahin, Ahmet
 45030 Manisa (TR)**

(74) Representative: **Beck Greener LLP
Fulwood House
12 Fulwood Place
London WC1V 6HR (GB)**

(56) References cited:
WO-A-00/41400  WO-A-02/09090
US-A- 5 966 387  US-A1- 2003 066 094
US-A1- 2006 176 963  US-A1- 2007 091 935
US-B1- 6 665 751

• **YOO S-S ED - INSTITUTE OF ELECTRICAL AND
ELECTRONICS ENGINEERS: "REALIZATION OF
THE SYNCHRONIZATION CONTROLLER FOR
MULTIMEDIA APPLICATIONS" IEEE GLOBECOM
1998. GLOBECOM '98. THE BRIDGE TO GLOBAL
INTEGRATION. SYDNEY, NOV. 8 - 12, 1998; [IEEE
GLOBAL TELECOMMUNICATIONS
CONFERENCE], NEW YORK, NY : IEEE, US, 1
January 1998 (1998-01-01), pages 798-803,
XP000825864 ISBN: 978-0-7803-4985-8**

EP 2 077 671 B1

**Description**

The present invention relates to a streaming media player and to a method in a streaming media player of generating a media stream as an output.

There is an increasing demand for the transmission of media streams over networks, particularly over the Internet. Streaming servers, which deliver the data to media players running on client computers, send the data at a prescribed average data rate. This average data rate is maintained by scheduling algorithms running on the streaming server.

Early media players for decoding audio and video typically required that the entire content be downloaded from a server onto the local computer before the player starts playing the decoded audio and video.

Recent players support streaming capabilities, i.e. the ability to play video and audio without having to have received the entire content before starting to play the video and audio. This is achieved by the media streaming player buffering some of the received data and starting to play audio and video that has been received before the entire content has arrived at the client computer. If the data rate of the incoming media stream is not sufficient and the buffer underflows, the player pauses to allow more data to arrive from the streaming server and resumes playing the audio and video only when its buffer is sufficiently filled again. On the other hand, if the data rate of the incoming media stream is too high, the buffer in the media player can overflow. In that case, video and/or audio data is dropped by the media player in order to allow the media player to catch up with the data that is being received. Buffering also compensates for jitter in the channel over which the audio and video is received.

It will be appreciated that with these prior art streaming media players, the pauses that are used to deal with buffer underflow disrupt the playback of the content, which is annoying and disturbing to the listener/viewer of the content. On the other hand, dropping of video and/or audio data to deal with buffer overflow can lead to visible and/or audible loss of quality.

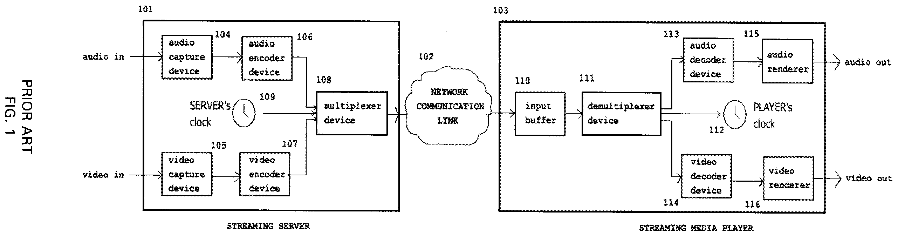

Figure 1 shows schematically the operation of such prior art streaming media players. In particular, there is shown a standard streaming server 101, a network communication link 102, and a standard streaming media player 103 in communication with the streaming server 101 via the network communication link 102.

In the standard streaming server 101, audio, video and other inputs are input to the streaming server 101 through one or more capture devices. In Figure 1, an audio capture device 104 and a video capture device 105 are shown, though the possible capture devices which may be present in a streaming server 101 are not limited to audio and video. Audio data captured by the audio capture device 104 is sent to an audio encoder 106 for encoding. Video data captured by the video capture device 105 is sent to a video encoder 107 for encoding. Encoded media data, in this example audio and video data, are multiplexed by a multiplexer device 108 which also gets the server's clock value from a clock 109 of the server 101.

The multiplexed media stream which is output by the multiplexer device 108 is sent over the network communication link 102 to the streaming media player 103.

The known streaming media player 103 buffers the incoming media stream using an input buffer 110. The media is passed from the input buffer 110 to a demultiplexer device 111, which demultiplexes the different media streams (e.g. the audio and video components of the incoming media stream). The demultiplexer device 111 also reads the server's clock value, which is provided by the server 101 in the media stream. The demultiplexer device 111 updates the player's clock 112 with the server's clock value so that, in principle, the streaming media player 103 can play back the content at the correct rate. Encoded audio and video outputs of the demultiplexer device 111 are input into an audio decoder device 113 and a video decoder device 114 respectively. Decoded audio is sent to an audio renderer 115 from the audio decoder device 113 and decoded video is sent to a video renderer 116 video decoder device 114 respectively.

US-B-6665751 discloses a streaming media player that is capable of dynamically changing its play back rate to allow for varying network conditions. The play back rate of the streaming media player is varied according to the state of the buffer of the streaming media player, i.e. how full or empty the buffer is according to a predetermined buffer size and predetermined thresholds. However, it is difficult to determine in advance an optimal buffer size and values for the thresholds and, in any event, these will vary from media stream to media stream.

US2007/091935 discloses a streaming media player, comprising receiving means to receive from a server a media stream as an input media stream; a clock comparator arranged to compare a clock value of a server from which a media stream is received as an input with a clock value of the player, and to generate a clock state value representing how much the server's clock value lags or leads the player's clock value; an output component arranged to generate an output media stream corresponding to said input media stream; and, a rate component arranged to receive a said clock state value from the clock comparator and to vary the rate of output of the media stream from the output component in dependency on the clock state value.

According to a first aspect of the present invention, there is provided a streaming media player for receiving from a server a media stream as an input and for generating a corresponding media stream as an output, the media player comprising a clock comparator arranged to compare a clock value of a server from which a media stream is received as an input with a clock value of the player, and to generate a clock state value representing how much the server's clock value lags or leads the player's clock value; an output component arranged to generate an output media stream corresponding to said input media stream; and, a rate component arranged to receive a said clock state value from the clock comparator and to vary the rate of output of the media stream from the output component in dependency on the clock state value, characterised in that the rate component is arranged to vary the rate of output of the media stream from the output component according to the formula:

$$s = m \ (SC(t) - PC(t)) \ / \ (SC(t) - SC(t-1))$$

where:

    s is the speed up or slow down ratio with respect to the original rate of output;
    m is the maximum allowable slow down ratio with respect to the original rate of output;
    PC(t) is the player's clock value at sampling time t; and,
    SC(t) is the server's clock value at sampling time t.

In this way, the streaming media player can adjust the rate of output of the media stream to minimise or prevent buffer underflow or overflow and thereby minimise or prevent pausing of playback and/or dropping of data. The playback rate can be dynamically adjusted if there is a difference between the server's clock rate and the player's clock rate to enable continuous and smooth playback of streaming media with little or no loss of data. The playback rate can be dynamically adjusted according to varying network conditions, which may lead to data packets arriving faster or slower than is optimal for the media player, again to enable continuous and smooth playback of streaming media with little or no loss of data. The media stream can be delivered to the media player in any of a number of ways, including for example as a broadcast or on-demand from the media player, and can be by wired or wireless connection, over the Internet, LANs, etc.

In an embodiment, the output component is arranged to generate an output media stream that comprises audio. Preferably, the output component is arranged so that a change in the rate of output of the media stream does not affect the pitch of the audio that is output by the output component. A number of techniques are known for ensuring that the pitch of the audio does not change, or at least does not change perceptively.

In an embodiment, the output component is arranged to generate an output media stream that comprises synchronized audio and video. Preferably, the output component is arranged so that a change in the rate of output of the media stream does not affect the pitch of the audio that is output by the output component.

In an embodiment, the clock comparator is arranged to provide the clock state value to an audio speed controller of the rate component to control the rate of output of audio from the player, the audio speed controller is arranged to control a clock of the player, and the clock of the player is arranged to control a video speed controller which is arranged to control the rate of output of video from the player. In this embodiment, it is the playback speed of the audio that is primarily adjusted, with the playback speed of the video in effect being adjusted in dependence thereon. This can be preferable because, in general, skipping or pausing of audio is more noticeable to the user.

According to a second aspect of the present invention, there is provided a method in a streaming media player of generating a media stream as an output corresponding to a media stream received as an input to the streaming media player from a server, the method comprising comparing a clock value of a server from which a media stream is received as an input with a clock value of the player; generating a clock state value representing how much the server's clock value lags or leads the player's clock value; generating an output media stream corresponding to said input media stream; and, varying the rate of output of the media stream from the output component in dependency on the clock state value, characterised in that the rate of output of the media stream is varied according to the formula:

$$s = m \ (SC(t) - PC(t)) \ / \ (SC(t) - SC(t-1))$$

where:

    s is the speed up or slow down ratio with respect to the original rate of output;
    m is the maximum allowable slow down ratio with respect to the original rate of output;
    PC(t) is the player's clock value at sampling time t; and,
    SC(t) is the server's clock value at sampling time t.

In an embodiment, the media stream comprises audio. Preferably, a change in the rate of output of the media stream does not affect the pitch of the audio that is output by the output component.

In an embodiment, the media stream comprises synchronized audio and video. Preferably, a change in the rate of output of the media stream does not affect the pitch of the audio that is output by the output component.

In an embodiment, the clock comparator provides the clock state value to an audio speed controller of the rate component to control the rate of output of audio from the player, the audio speed controller controls a clock of the player, and the clock of the player controls a video speed controller which controls the rate of output of video from the player.

In an embodiment, the server's clock value is embedded within the input media stream received from the server. In another embodiment, the server's clock value is provided by the server to a source that is separate from the server and the media player, and the media player obtains the server's clock value from said separate source.

There is also provided a computer program comprising program instructions for instantiating a streaming media player on a computer to perform a method as described above. The computer program may be embodied on a computer-readable medium.

Embodiments of the present invention will now be described by way of example with reference to the accompanying drawings, in which:

Figure 1 shows schematically components of a prior art system comprising a streaming server, a network communication link and a streaming media player; and,

Figure 2 shows a schematic block diagram of an example of a streaming media player in accordance with an embodiment of the present invention.

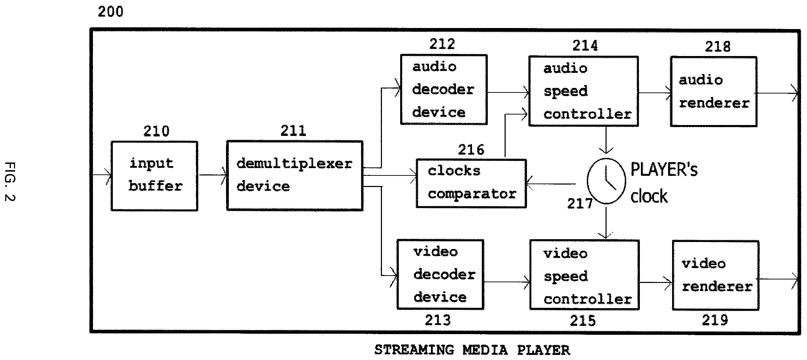

Referring to Figure 2, there is shown a schematic block diagram of an example of a streaming media player 200 in accordance with an embodiment of the present invention. The streaming media player 200 has a buffer 210 which receives and buffers an incoming media stream delivered from a streaming server (not shown in Figure 2). The media data is passed from the input buffer 210 to a demultiplexer device 211, which demultiplexes the different media streams (e.g. the audio and video components of the incoming media stream). Encoded audio and video outputs of the demultiplexer device 211 are input into an audio decoder device 212 and a video decoder device 213 respectively. Decoded audio is sent from the audio decoder device 212 to an audio speed controller 214. Decoded video is sent from the video decoder device 213 to a video speed controller 215.

The demultiplexer device 211 also reads the server's clock value, which in one embodiment is provided by the server in the media stream, and passes the server's clock value as a first input to a clock's comparator 216 of the media player 200. The clock's comparator 216 receives as a second input the player's clock value from the player's clock 217. The clock's comparator 216 compares the server's and player's clock values and generates a clock state value, which is output by the clock's comparator 216 to the audio speed controller 214.

Decoded audio data is sent from the audio decoder device 212 to an audio renderer 218. The rate of data transfer from the audio decoder device 212 to the audio renderer 218 is controlled by the audio speed controller 214. Similarly, decoded video data is sent from the video decoder device 213 to a video renderer 219 and the rate of data transfer from the video decoder device 213 to the video renderer 219 is controlled by the video speed controller 215.

The clock state value generated by the clock's comparator 216 is input to the audio speed controller 214, which then updates the player's clock 217. The updated player's clock value is sent from the player's clock 217 to the video speed controller 215.

As will be understood, therefore, the player's clock speed is varied according to the clock state generated by the clock's comparator 216. The player's clock speed may be varied in a number of ways depending on the comparison between the server's clock value and the player's clock value.

In one example, the player's clock speed may be varied according to the difference between the server's clock value and the player's clock value, and may be varied in proportion to the difference between the server's clock value and the player's clock value. In one preferred embodiment, the player's clock speed may be varied according to the formula:

$$s = m \; (SC(t) - PC(t)) \; / \; (SC(t) - SC(t-1))$$

where:

s is the speed-up or slow-down ratio with respect to the original speed;
m is the maximum allowable slow-down ratio with respect to the original speed;

PC(t) is the player's clock value at sampling time t; and,

SC(t) is the server's clock value at sampling time t.

The effects and benefits of this can be more fully understood from the following. In general, the streaming server sends data with a definite rate, which depends inter alia on the capturing rate, and expects that the buffer 210 of the media player 200 will never overflow or underflow because it is expected that the media player 200 consumes data according to this definite data rate. This can be regarded as the server sending the media stream with a rate that is equal to consuming rate of a virtual media player on the server system. Therefore, the sending rate or the consuming rate of a virtual media player on the server system depends on the clock rate of the server system. However, the clock rate of the media player 200 may not be equal to the server's clock rate. If the clock rate of the server and the media player 200 are not equal, the buffer 210 will underflow or overflow, which will cause annoying interrupts or data losses respectively.

In the best case, the server's clock and the receiver's clock run at the same rate with just an offset difference. In that case, as is known per se, each frame's Presentation Time Stamp (PTS) is compared in the media player 200 with the player's clock (i.e. the receiver's clock plus offset). If the two match, the frame is presented for display (in the case of video data). (A Presentation Time Stamp indicates the instant at which an encoded picture or audio block should be removed from the receiver buffer, instantaneously decoded, and presented for display.)

However, most probably, the offset between the player's clock and the server's clock will not be constant, since the player's clock may run at a different rate from the server's clock. To provide synchronization of the clock rates of the server and the player, the server's clock value is sent within the bitstream periodically to allow the player to update the player's system clock according to this value and to keep itself in synchronization with the sender. However, as noted above, merely updating the player's clock periodically to synchronize with the server's clock may cause the player to drop or duplicate audio and/or frames or make some necessary adjustments to the audio to keep audio and video in synchronization.

The presently preferred media player accomplishes synchronization with the server and prevents underflow or overflow conditions of its internal buffer by changing the speed of playback according to the server's clock rate, and particularly the difference between the server's clock rate and the media player's clock rate, instead of directly using the server's clock rate to update media player's master clock.

Whenever the media player reads the server's clock rate data from the media stream, it compares the server's clock rate with its own master clock. If the media player's master clock lags, the playback rate is increased to avoid underflow. Otherwise, if the media player's master clock leads, the playback rate is decreased to prevent overflow.

The clock state value can have one of the 3 values covering the following 3 states:

the player's clock leads the server's clock;

the player's clock lags the server's clock; or

the player's clock is in synchronization with the server's clock.

By way of specific example, assume for example that the media player decodes the server's clock value SC(t-1) from the bitstream as SC(t-1) = 10 ms and the player's clock value also reads PC(t-1) = 10 ms at time t-1.

At the next time instant t, the player will decode the server's clock value from the bitstream and read the player's clock value from its own clock. Assume for example that SC(t) = 20 ms, this being the server's clock value read from the bitstream at time t.

For smooth, synchronized playback, the player's clock value should ideally be equal to the server's clock value as read from the bitstream whenever the server's clock value is read from the stream.

If for example PC(t) = 19 ms, then the player's clock lags the server's clock, and the player's clock rate should be increased. On the other hand, if for example PC(t) = 21 ms, the player's clock leads the server's clock, and the player's clock rate should be reduced. Finally, if PC(t) = 20 ms, the player's clock is already in synchronization with the server's clock, and the player's clock rate is kept the same.

In the above example, where the media player 200 plays back both audio and video, the audio renderer 218 and the video renderer 219 constitute an output component of the media player 200 and the audio speed controller 214 and the video speed controller 215 constitute a rate component of the media player 200. The media player 200 may however play only audio or only video and will have the appropriate renderer only. In principle, other media renderers may be employed.

It will further be noted that in the example described above, the audio speed controller 214 is used to update the player's clock 217, which in turn then updates the video speed controller 215. This is because, in general, skipping or pausing of audio is more noticeable to the user and therefore it is preferable primarily to adjust the playback speed of the audio. However, it is possible to adjust the playback speed of the video directly, for example by sending the output of the clock's comparator 216 to the video speed controller 215 much as described above when the output of the clock's comparator 216 is sent to the audio speed controller 214. This may be done instead of or in addition to adjusting the playback speed of the audio directly as described above.

In all of the example above, the arrangement is preferably such that the pitch of the audio is not affected when the playback speed of the audio is varied. A number of techniques for achieving this are known.

Embodiments of the present invention have been described with particular reference to the examples illustrated. However, it will be appreciated that variations and modifications may be made to the examples described within the scope of the present invention. For example, whilst in the embodiment described above, the demultiplexer device 211 reads the server's clock value as provided by the server in the media stream, the server's clock value can be obtained in other ways. For example, the clock value can be sent from the server in the same stream but in a different channel. In this case, the clock value should be related to the stream sent. For instance, 10Kbytes of data is typically equivalent to 200ms for a stream having a bitrate of 50Kbytes per second. In another example, the server and the player read the clock value from a different source, namely a third party source. When the server prepares the stream for transmission, instead of inserting clock values, it inserts some pointers which point at the third party source. When the player receives each pointer, it reads the clock value from the third party source and compares it with its own clock value. It should be noted that this particular example requires that the access time to the third party clock source is extremely fast.

**Claims**

1. A streaming media player (200) comprising:

   receiving means to receive from a server a media stream as an input media stream;
   a clock comparator (216) arranged to compare a clock value of a server from which a media stream is received as an input with a clock value of the player, and to generate a clock state value representing how much the server's clock value lags or leads the player's clock value;
   an output component (218, 219) arranged to generate an output media stream corresponding to said input media stream; and,
   a rate component (214, 215) arranged to receive a said clock state value from the clock comparator (216) and to vary the rate of output of the media stream from the output component in dependency on the clock state value, **characterised in that**
   the rate component is arranged to vary the rate of output of the media stream from the output component according to the formula:

$$s = m\ (SC(t) - PC(t))\ /\ (SC(t) - SC(t-1))$$

   where:

   s is the speed up or slow down ratio with respect to the original rate of output;
   m is the maximum allowable slow down ratio with respect to the original rate of output;
   PC(t) is the player's clock value at sampling time t; and,
   SC(t) is the server's clock value at sampling time t.

2. A streaming media player (200) according to claim 1, wherein the output component is arranged to generate an output media stream that comprises audio.

3. A streaming media player (200) according to claim 1, wherein the output component is arranged to generate an output media stream that comprises synchronized audio and video.

4. A streaming media player (200) according to claim 2 or to claim 3, wherein the output component is arranged so that a change in the rate of output of the media stream does not affect the pitch of the audio that is output by the output component.

5. A streaming media player (200) according to claim 2. 3 or claim 4, wherein the clock comparator (216) is arranged to provide the clock state value to an audio speed controller (214) of the rate component to control the rate of output of audio from the player, the audio speed controller (214) is arranged to control a clock (217) of the player, and the clock (217) of the player is arranged to control a video speed controller (215) which is arranged to control the rate of output of video from the player.

6. A method of generating a media stream, the method comprising:

receiving from a server at a media player a media stream as an input media stream;
comparing a clock value of a server from which a media stream is received as an input with a clock value of the player;
generating a clock state value representing how much the server's clock value lags or leads the player's clock value;
generating an output media stream corresponding to said input media stream; and,
varying the rate of output of the media stream from the output component in dependency on the clock state value, **characterised in that**
the rate of output of the media stream is varied according to the formula:

$$s = m\ (SC(t) - PC(t))\ /\ (SC(t) - SC(t-1))$$

where:

s is the speed up or slow down ratio with respect to the original rate of output;
m is the maximum allowable slow down ratio with respect to the original rate of output;
PC(t) is the player's clock value at sampling time t; and,
SC(t) is the server's clock value at sampling time t.

7. A method according to claim 6, wherein the media stream comprises audio.

8. A method according to claim 6 or claim 7, wherein the media stream comprises synchronized audio and video.

9. A method according to claim 7 or to claim 8, wherein a change in the rate of output of the media stream does not affect the pitch of the audio that is output by the output component.

10. A method according to claim 8 or claim 9, wherein the clock comparator (216) provides the clock state value to an audio speed controller (214) of the rate component to control the rate of output of audio from the player, the audio speed controller controls a clock (217) of the player, and the clock (217) of the player controls a video speed controller (215) which controls the rate of output of video from the player.

11. A method according to any of claims 6 to 10, wherein the server's clock value is embedded within the input media stream received from the server.

12. A method according to any of claims 6 to 10, wherein the server's clock value is provided by the server to a source that is separate from the server and the media player and wherein the media player obtains the server's clock value from said separate source.

13. A computer program comprising instructions which, when the program is executed by a streaming media player on a computer, cause the player to carry out the method of any of claims 6 to 12.

14. A computer-readable data carrier having stored thereon the computer program of claim 13.


**Patentansprüche**

1. Streaming-Mediaplayer (200), umfassend:

Empfangsmittel zum Empfangen eines Medienstroms von einem Server als einen Eingabemedienstrom;
einen Taktkomparator (216), der zum Vergleichen eines Taktwerts eines Servers, von dem ein Medienstrom als eine Eingabe mit einem Taktwert des Player empfangen wird, und zum Erzeugen eines Taktzustandswerts angeordnet ist, der darstellt, wie sehr der Taktwert des Servers hinter dem Taktwert des Players zurückbleibt

oder diesem vorausgeht;
eine Ausgabekomponente (218, 219), die zum Erzeugen eines Ausgabemedienstroms angeordnet ist, der dem Eingabemedienstrom entspricht; und
eine Ratenkomponente (214, 215), die zum Empfangen des Taktzustandswerts vom Taktkomparator (216) und zum Ändern der Ausgaberate des Medienstroms aus der Ausgabekomponente abhängig vom Taktzustandswert angeordnet ist, **dadurch gekennzeichnet, dass**
die Ratenkomponente so angeordnet ist, dass sie die Ausgaberate des Medienstroms aus der Ausgabekomponente gemäß der folgenden Formel ändert:

$$s = m \ (SC(t) - PC(t)) \ / \ (SC(t) - SC(t-1))$$

wobei:

s das Beschleunigungs- oder Verlangsamungsverhältnis bezüglich der ursprünglichen Ausgaberate ist;
m das höchstzulässige Verlangsamungsverhältnis bezüglich der ursprünglichen Ausgaberate ist;
PC(t) der Taktwert des Players zur Abtastzeit t ist; und
SC(t) der Taktwert des Servers zur Abtastzeit t ist.

2. Streaming-Mediaplayer (200) nach Anspruch 1, wobei die Ausgabekomponente zum Erzeugen eines Ausgabemedienstroms angeordnet ist, der Audio umfasst.

3. Streaming-Mediaplayer (200) nach Anspruch 1, wobei die Ausgabekomponente zum Erzeugen eines Ausgabemedienstroms angeordnet ist, der synchronisiertes Audio und Video umfasst.

4. Streaming-Mediaplayer (200) nach Anspruch 2 oder Anspruch 3, wobei die Ausgabekomponente so angeordnet ist, dass eine Änderung der Ausgaberate des Medienstroms die Tonhöhe des Audios, das von der Ausgabekomponente ausgegeben wird, nicht beeinflusst.

5. Streaming-Mediaplayer (200) nach Anspruch 3 oder Anspruch 4, wobei der Taktkomparator (216) zum Bereitstellen des Taktzustandswerts an eine Audiogeschwindigkeitssteuerung (214) der Ratenkomponente angeordnet ist, um die Audioausgaberate vom Player zu steuern, die Audiogeschwindigkeitssteuerung (214) zum Steuern eines Takts (217) des Players angeordnet ist, und der Takt (217) des Players zum Steuern einer Videogeschwindigkeitssteuerung (215) angeordnet ist, die zum Steuern der Videoausgaberate vom Player angeordnet ist.

6. Verfahren zum Erzeugen eines Medienstroms, das Verfahren umfassend:

Empfangen eines Medienstroms von einem Server an einem Mediaplayer als einen Eingabemedienstrom;
Vergleichen eines Taktwerts eines Servers, von dem ein Medienstrom als eine Eingabe mit einem Taktwert des Player empfangen wird;
Erzeugen eines Taktzustandswerts, der darstellt, wie sehr der Taktwert des Servers hinter dem Taktwert des Players zurückbleibt oder diesem vorausgeht;
Erzeugen eines Ausgabemedienstroms, der dem Eingabemedienstrom entspricht; und
Ändern der Ausgaberate des Medienstroms aus der Ausgabekomponente abhängig vom Taktzustandswert, **dadurch gekennzeichnet, dass**
die Ausgaberate des Medienstroms gemäß der folgenden Formel geändert wird:

$$s = m \ (SC(t) - PC(t)) \ / \ (SC(t) - SC(t-1))$$

wobei:

s das Beschleunigungs- oder Verlangsamungsverhältnis bezüglich der ursprünglichen Ausgaberate ist;
m das höchstzulässige Verlangsamungsverhältnis bezüglich der ursprünglichen Ausgaberate ist;
PC(t) der Taktwert des Players zur Abtastzeit t ist; und
SC(t) der Taktwert des Servers zur Abtastzeit t ist.

**7.** Verfahren nach Anspruch 6, wobei der Medienstrom Audio umfasst.

**8.** Verfahren nach Anspruch 6 oder Anspruch 7, wobei der Medienstrom synchronisiertes Audio und Video umfasst.

**9.** Verfahren nach Anspruch 7 oder Anspruch 8, wobei eine Änderung Ausgaberate des Medienstroms die Tonhöhe des Audios, das von der Ausgabekomponente ausgegeben wird, nicht beeinflusst.

**10.** Verfahren nach Anspruch 8 oder Anspruch 9, wobei der Taktkomparator (216) den Taktzustandswert einer Audiogeschwindigkeitssteuerung (214) der Ratenkomponente bereitstellt, um die Audioausgaberate aus dem Player zu steuern, die Audiogeschwindigkeitssteuerung einen Takt (217) des Players steuert, und der Takt (217) des Players eine Videogeschwindigkeitssteuerung (215) steuert, um die Videoausgaberate vom Player zu steuern.

**11.** Verfahren nach einem der Ansprüche 6 bis 10, wobei der Taktwert des Servers im Eingabemedienstrom eingebettet ist, der vom Server empfangen wird.

**12.** Verfahren nach einem der Ansprüche 6 bis 10, wobei der Taktwert des Servers vom Server einer Quelle bereitgestellt wird, die vom Server und dem Medianplayer getrennt ist, und wobei der Mediaplayer den Taktwert des Servers von der getrennten Quelle erhält.

**13.** Computerprogramm, das Anweisungen umfasst, die beim Ausführen des Programms durch einen Streaming-Mediaplayer auf einem Computer den Player dazu veranlassen, das Verfahren nach einem der Ansprüche 6 bis 12 auszuführen.

**14.** Computerlesbarer Datenträger, auf dem das Computerprogramm nach Anspruch 13 gespeichert ist.

## Revendications

**1.** Lecteur multimédia de diffusion en continu (200) comprenant :

des moyens de réception pour recevoir, à partir d'un serveur, un flux multimédia en tant que flux multimédia d'entrée ;
un comparateur d'horloges (216) conçu pour comparer une valeur d'horloge d'un serveur à partir duquel un flux multimédia est reçu en tant qu'entrée à une valeur d'horloge du lecteur, et pour générer une valeur d'état d'horloge représentant de combien la valeur d'horloge du serveur est en retard ou en avance par rapport à la valeur d'horloge du lecteur ;
un composant de sortie (218, 219) conçu pour générer un flux multimédia de sortie correspondant audit flux multimédia d'entrée ; et,
un composant de débit (214, 215) conçu pour recevoir ladite valeur d'état d'horloge à partir du comparateur d'horloges (216) et pour faire varier le débit de sortie du flux multimédia à partir du composant de sortie en fonction de la valeur d'état d'horloge,
**caractérisé par le fait que**
le composant de débit est conçu pour faire varier le débit de sortie du flux multimédia à partir du composant de sortie selon la formule :

$$s = m \ (SC(t) - PC(t)) \ / \ (SC(t) - SC \ (t-1))$$

où :

s est le rapport d'accélération ou de ralentissement par rapport au débit de sortie d'origine ;
m est le rapport de ralentissement admissible maximal par rapport au débit de sortie d'origine ;
PC(t) est la valeur d'horloge du lecteur à un instant d'échantillonnage t ; et,
SC(t) est la valeur d'horloge du serveur à un instant d'échantillonnage t.

**2.** Lecteur multimédia de diffusion en continu (200) selon la revendication 1, dans lequel le composant de sortie est conçu pour générer un flux multimédia de sortie qui comprend de l'audio.

**3.** Lecteur multimédia de diffusion en continu (200) selon la revendication 1, dans lequel le composant de sortie est conçu pour générer un flux multimédia de sortie qui comprend de l'audio et de la vidéo synchronisés.

**4.** Lecteur multimédia de diffusion en continu (200) selon la revendication 2 ou la revendication 3, dans lequel le composant de sortie est conçu de telle sorte qu'un changement du débit de sortie du flux multimédia n'affecte pas la tonie de l'audio qui est délivré par le composant de sortie.

**5.** Lecteur multimédia de diffusion en continu (200) selon la revendication 3 ou la revendication 4, dans lequel le comparateur d'horloges (216) est conçu pour fournir la valeur d'état d'horloge à un dispositif de commande de vitesse d'audio (214) du composant de débit pour commander le débit de sortie de l'audio en provenance du lecteur, le dispositif de commande de vitesse d'audio (214) est conçu pour commander une horloge (217) du lecteur, et l'horloge (217) du lecteur est conçue pour commander un dispositif de commande de vitesse de vidéo (215) qui est conçu pour commander le débit de sortie de la vidéo en provenance du lecteur.

**6.** Procédé de génération d'un flux multimédia, le procédé comprenant :

recevoir, à partir d'un serveur au niveau d'un lecteur multimédia, un flux multimédia en tant que flux multimédia d'entrée ;
comparer une valeur d'horloge d'un serveur à partir duquel un flux multimédia est reçu en tant qu'entrée à une valeur d'horloge du lecteur ;
générer une valeur d'état d'horloge représentant de combien la valeur d'horloge du serveur est en retard ou en avance par rapport à la valeur d'horloge du lecteur ;
générer un flux multimédia de sortie correspondant audit flux multimédia d'entrée ; et,
faire varier le débit de sortie du flux multimédia à partir du composant de sortie en fonction de la valeur d'état d'horloge, **caractérisé par le fait que**
le débit de sortie du flux multimédia est amené à varier selon la formule :

$$s = m \ (SC(t) - PC(t)) \ / \ (SC(t) - SC \ (t-1))$$

où :

s est le rapport d'accélération ou de ralentissement par rapport au débit de sortie d'origine ;
m est le rapport de ralentissement admissible maximal par rapport au débit de sortie d'origine ;
PC(t) est la valeur d'horloge du lecteur à un instant d'échantillonnage t ; et,
SC(t) est la valeur d'horloge du serveur à un instant d'échantillonnage t.

**7.** Procédé selon la revendication 6, dans lequel le flux multimédia comprend de l'audio.

**8.** Procédé selon la revendication 6 ou la revendication 7, dans lequel le flux multimédia comprend de l'audio et de la vidéo synchronisés.

**9.** Procédé selon la revendication 7 ou la revendication 8, dans lequel un changement du débit de sortie du flux multimédia n'affecte pas la tonie de l'audio qui est délivré par le composant de sortie.

**10.** Procédé selon la revendication 8 ou la revendication 9, dans lequel le comparateur d'horloges (216) fournit la valeur d'état d'horloge à un dispositif de commande de vitesse d'audio (214) du composant de débit pour commander le débit de sortie de l'audio en provenance du lecteur, le dispositif de commande de vitesse d'audio commande une horloge (217) du lecteur, et l'horloge (217) du lecteur commande un dispositif de commande de vitesse de vidéo (215) qui commande le débit de sortie de la vidéo en provenance du lecteur.

**11.** Procédé selon l'une quelconque des revendications 6 à 10, dans lequel la valeur d'horloge du serveur est intégrée dans le flux multimédia d'entrée reçu à partir du serveur.

**12.** Procédé selon l'une quelconque des revendications 6 à 10, dans lequel la valeur d'horloge du serveur est fournie par le serveur à une source qui est séparée du serveur et du lecteur multimédia, et dans lequel le lecteur multimédia obtient la valeur d'horloge du serveur à partir de ladite source séparée.

**13.** Programme d'ordinateur comprenant des instructions qui, lorsque le programme est exécuté par un lecteur multimédia de diffusion en continu sur un ordinateur, amènent le lecteur à réaliser le procédé selon l'une quelconque des revendications 6 à 12.

**14.** Support de données lisible par ordinateur ayant, stocké sur celui-ci, le programme d'ordinateur selon la revendication 13.

PRIOR ART
FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6665751 B

- US 2007091935 A